# EUROPÄISCHE PATENTSCHRIFT

(11) **EP 2 914 822 B1**
(45) Veröffentlichungstag und Bekanntmachung des Hinweises auf die Patenterteilung: **17.05.2017**
(21) Anmeldenummer: 13774448.8
(22) Anmeldetag: 11.10.2013
(51) Int. Cl.: F01N 5/02, F02B 37/18

(54) **ABGASANLAGE MIT THERMOELEKTRISCHEM GENERATOR**
EXHAUST SYSTEM WITH THERMOELECTRIC GENERATOR
SYSTÈME D'ÉCHAPPEMENT AVEC GÉNÉRATEUR THERMOÉLECTRIQUE

(30) Priorität: 31.10.2012 DE 102012219968
(43) Veröffentlichungstag der Anmeldung: 09.09.2015
(73) Patentinhaber: Bayerische Motoren Werke Aktiengesellschaft, 80809 München (DE)
(72) Erfinder: BAUKNECHT, Andreas, 80798 München (DE); BUCHER, Samuel, 3012 Bern (CH)
(86) Internationale Anmeldenummer: PCT/EP2013/071272
(87) Internationale Veröffentlichungsnummer: WO 2014/067765

(56) Entgegenhaltungen:
- WO-A1-2012/047209
- WO-A2-2010/112571
- DE-A1-102009 020 424

## Beschreibung

Die Erfindung betrifft eine Abgasanlage gemäß dem Oberbegriff des Patentanspruchs 1.

Das Abgas von Verbrennungsmotoren, wie beispielsweise von Kraftfahrzeugen, weist üblicherweise eine hohe thermische Energie auf. Um diese thermische Energie nutzbar zu machen und eine ungenutzte Ausleitung an die Umgebung zu vermeiden, sind Abgasanlagen bekannt, die eine thermoelektrische Wandlungsanordnung zur Abgasenergierückgewinnung umfassen. Diese ermöglichen durch teilweise Energierückgewinnung einen energetischen Gesamtwirkungsgrad des Verbrennungsmotors deutlich zu verbessern.

Zum Einsatz kommen hierbei thermoelektrische Generatoren, die bekanntermaßen in Abgaskatalysatoren integriert werden können und thermoelektrische Wandlerelemente umfassen, welche basierend auf dem allgemein bekannten "Seebeck-Effekt" thermische Energie in elektrische Energie wandeln. Vereinfacht dargestellt, wird hierzu eine Temperaturdifferenz zwischen zwei Enden der Wandlerelemente genutzt, die im Falle eines Kraftfahrzeugs im Allgemeinen zwischen dem Abgas und einem Kühlmittel besteht, welche beide getrennt voneinander den thermoelektrischen Generator durchströmen. Aufgrund der allgemeinen Bekanntheit eines thermoelektrischen Generators kann auf eine detaillierte Beschreibung der physikalischen Vorgänge verzichtet werden.

Bei den bekannten Anordnungen können bei bestimmten Betriebsbereichen - insbesondere bei hohen Laststufen - des Verbrennungsmotors, drei voneinander unabhängige "Überlastfälle" auftreten. Ein erster Überlastfall ergibt sich für den Fall eines zu hohen Abgasmassenstroms. Dieser führt zu einem Anstieg eines Abgasgegendrucks und zu einem erheblichen Anstieg einer Ladungswechselarbeit des Verbrennungsmotors, wobei letzterer einen negativen Einfluss auf einen Volllastverbauch bzw. eine Volllastleistung hat. Ein weiterer Überlastfall kann dadurch eintreten, dass ein verstärkter Wärmeeintrag in das durch den thermoelektrischen Generator geführte Kühlmittel erfolgt und dieses durch den hiermit wirkgekoppelten Kühlkreislauf des Fahrzeugs nicht in ausreichendem Umfang abgeführt werden kann. Der dritte Überlastfall ergibt sich für den Fall einer Überschreitung einer erlaubten Maximaltemperatur des thermoelektrischen Materials des thermoelektrischen Generators, wodurch dieses Schaden nehmen kann. Um diese Überlastfälle zu vermeiden, ist bekannt, einen thermoelektrischen Generator vorzusehen, der eigenen Bypass umfasst, der beispielsweise in dem thermoelektrischen Generator integriert ist. Zusätzlich erfordert die bekannte Anordnung eine eigene Steuerung eines Durchflusses durch den Bypass.

Aus der WO 2012/047209 A1 ist eine Abgasleitung mit einem Abgasturbolader sowie einem thermoelektrischen Wandler bekannt, wobei eine Bypassleitung vor dem Abgasturbolader aus der Abgasleitung abzweigt und hinter dem Wandler in die Abgasleitung wieder einmündet.

Die WO 2010/112571 A2 beschreibt eine thermoelektrische Generatoreinheit mit einem Abgaswärmetauscher und einem Kühlmittelwärmetauscher.

In der DE 10 2009 020 424 A1 ist eine Abgasführungsvorrichtung mit einem thermoelektrischen Generator offenbart, bei der eine Vielzahl von thermoelektrischen Schenkelpaaren zwischen einer vom Abgas erwärmten ersten Fläche und einer vom Kühlmittel gekühlten zweiten Fläche angeordnet sind.

Aufgabe der Erfindung ist es daher, eine Abgasanlage bereitzustellen, welche die genannten Nachteile zumindest teilweise beseitigt und insbesondere auf möglichst einfache und effektive Weise die drei oben genannten Überlastfälle so weit wie möglich vermeidet.

Diese Aufgabe wird gelöst mittels einer Abgasanlage mit den Merkmalen des Patentanspruchs 1. Vorteilhafte Ausführungsformen ergeben sich aus den abhängigen Patentansprüchen.Demnach wird eine Abgasanlage, insbesondere für eine Verbrennungskraftmaschine, mit einer Abgasleitung bereitgestellt, wobei die Abgasleitung zumindest einen Abgasturbolader sowie eine in Strömungsrichtung eines Abgases nachfolgend angeordnete thermoelektrische Wandleranordnung mit einer thermoelektrischen Wandlerstufe umfasst, wobei der Abgasleitung mindestens eine Bypassleitung zugeordnet ist, welche stromaufwärts vor dem Abgasturbolader aus der Abgasleitung zum Ausleiten mindestens eines Anteils des Abgases in die mindestens eine Bypassleitung abgasführend abzweigt. Außerdem mündet die mindestens eine Bypassleitung stromabwärts hinter der thermoelektrischen Wandlerstufe abgasführend in die Abgasleitung ein.

Des Weiteren umfasst die thermoelektrische Wandlerstufe einen thermoelektrischen Generator, mindestens einen Wärmetauscher und einen mit dem Wärmetauscher gekoppelten Kühlkreislauf, wobei der mindestens eine Wärmetauscher mit der Abgasleitung wirkgekoppelt ist, um einen Wärmeaustausch zwischen der Abgasleitung und dem mit dem Wärmetauscher gekoppelten Kühlkreislauf zu bewirken, wobei außerdem der thermoelektrische Generator der thermoelektrischen Wandlerstufe mit dem Kühlkreislauf derart wirkgekoppelt ist, dass der thermoelektrische Generator innerhalb des Kühlkreislaufs und somit außerhalb der Abgasleitung angeordnet ist, wobei ein Wärmeaustausch über den mit der Abgasleitung wirkgekoppelten Wärmetauscher auf ein Kühlmedium des Kühlkreislaufs erfolgt und dieses erwärmt und das erwärmte Kühlmedium wiederum nachfolgend den thermoelektrischen Generator beaufschlagt.

Es werden also eine oder mehrere Bypassleitungen vorgeschlagen, die vor einem Abgasturbolader bzw. dessen Turbine aus der Abgasleitung abzweigen, um zumindest einen Teil des Abgases aus der Abgasleitung in die jeweilige Bypassleitung auszuleiten und stromabwärts nachfolgend zu der thermoelektrischen Wandlerstufe in die Abgasleitung zurückzuführen.

Das mindestens teilweise Ausleiten des Abgases vor dem Abgasturbolader bzw. vor dessen Turbine dient somit einerseits einer Ladedruckreduzierung für die Turbine des Abgasturboladers.

Andererseits wird mittels der Anordnung erreicht, dass auch der die thermoelektrische Wandlerstufe beaufschlagende Abgasstrom mit Hilfe der mindestens teilweisen Ausleitung des Abgases beeinflusst werden kann. Auf diese Weise wird es möglich auf vorteilhafte Weise die drei oben genannten Überlastfälle zu vermeiden bzw. deren Auswirkung zu reduzieren , insbesondere bei hohen Motorlasten mit großen Abgasmassenströme und besonders hohen Abgastemperaturen.

Die Anordnung erlaubt folglich eine kombinierte Bypassanordnung für den Abgasturbolader bzw. dessen Turbine sowie gleichzeitig für die thermoelektrische Wandlerstufe vorzusehen, wobei die Anordnung besonders einfach ausgestaltet ist und einen geringen Bauraumbedarf aufweist. Mit anderen Worten wird statt dessen erreicht, dass sich der Abgasturbolader und die Wandlerstufe gemeinsam dieselbe Bypassleitung teilen und somit in vorteilhafter Weise auf eine zusätzliche separate Bypassanordnung für den thermoelektrischen Generator sowie auf eine separate Steuerung eines Durchflusses durch die Bypassanordnung verzichtet werden kann.

Gemäß einer weiteren Ausführungsform umfasst die thermoelektrische Wandleranordnung eine in Strömungsrichtung des Abgases nachfolgend zu der thermoelektrischen Wandlerstufe angeordnete Katalysatorstufe, wobei die mindestens eine Bypassleitung zwischen der thermoelektrischen Wandlerstufe und der stromabwärts nachfolgenden Katalysatorstufe in die Abgasleitung abgasführend einmündet.

Mit Hilfe dieser Ausgestaltungsform wird also das durch die mindestens eine Bypassleitung geführte Abgas vor der Katalysatorstufe wieder in die Abgasleitung zurückgeführt. Somit kann mittels des einen oder der mehreren Bypassleitungen zwar eine Umgehung der thermoelektrischen Wandlerstufe bereitgestellt werden, gleichzeitig ist jedoch die Katalysatorstufe sowohl für das in der Abgasleitung strömende Abgas als auch für das durch den bzw. die Bypassleitungen geführte Abgas nutzbar. Folglich kann auf eine zusätzliche Katalysatoranordnung innerhalb der Bypassleitungen verzichtet werden.

Wie bereits beschrieben umfasst die thermoelektrische Wandlerstufe einen thermoelektrischen Generator.

Gemäß der beschriebenen Ausführungsform umfasst die thermoelektrische Wandlerstufe mindestens einen Wärmetauscher und einen mit dem Wärmetauscher gekoppelten Kühlkreislauf.

Demnach ist die thermoelektrische Wandlerstufe derart ausgestaltet, dass ein oder mehrere Wärmetauscher mit der Abgasleitung wirkgekoppelt sind, um einen Wärmeaustausch zwischen der Abgasleitung und dem mit dem Wärmetauscher gekoppelten Kühlkreislauf zu bewirken. Hierzu kann der Wärmetauscher mittelbar oder unmittelbar mit dem in der Abgasleitung geführten Abgas wärmetauschend gekoppelt sein.

Des Weiteren ist der thermoelektrische Generator der thermoelektrischen Wandlerstufe mit dem Kühlkreislauf wirkgekoppelt. In diesem Fall ist der thermoelektrische Generator innerhalb des Kühlkreislaufs und somit außerhalb der Abgasleitung angeordnet. Vorzugsweise erfolgt ein Wärmeaustausch über den mit der Abgasleitung wirkgekoppelten Wärmetauscher auf ein Kühlmedium des Kühlkreislaufs und erwärmt dieses. Das erwärmte Kühlmedium wiederum beaufschlagt nachfolgend den thermoelektrischen Generator und stellt somit die zur Energierückgewinnung erforderliche Temperaturdifferenz durch Wärmezufuhr bereit.

Beispielsweise kann der thermoelektrische Generator eine thermoelektrische sandwichartige Struktur und/oder eine thermoelektrische Röhrenstruktur, insbesondere einen Rohrbündelwärmeübertrager, aufweisen.

Des Weiteren kann die mindestens eine Bypassleitung ein Stellglied, insbesondere eine betätigbare Klappe, zum wahlweisen und mindestens teilweisen Schließen und/oder Öffnen der Bypassleitung umfassen. Vorzugsweise ist das Stellglied als Wastegateklappe eines Abgasturboladers ausgebildet. Diese sind für die vorherrschenden Abgastemperaturen im Bereich des Abgaskatalysators bereits ausgelegt. Selbstverständlich sind hierbei spezifische Anpassungen, beispielsweise hinsichtlich geometrischer Gesichtspunkte, bei Bedarf möglich. Die Verwendung einer Wastegateklappe bietet darüber hinaus den Vorteil, dass diese ohnehin für den Abgasturbolader in der Regel vorgesehen werden muss, so dass aufgrund der kombinierten Bypassleitung(en) und deren Stellglied dieses auch für die thermoelektrische Wandlerstufe nutzbar ist und folglich kein zusätzliches Bauteil erforderlich wird, wodurch sich hierfür keine Zusatzkosten und kein zusätzliches Ausfallrisiko ergeben.

Alternativ sind andere Stellglieder einsetzbar, die geeignet sind den lokal vorherrschenden Temperaturen zu widerstehen und die vorgesehene Funktion bereitzustellen.

Unabhängig von der Ausführungsform des Stellglieds kann dieses entweder im Bereich einer Eingangsstelle der jeweiligen Bypassleitung, d.h. im Bereich der Ausleitung aus der Abgasleitung, oder im Bereich der Ausgangsstelle der jeweiligen Bypassleitung, d.h. im Bereich ihrer Einmündung in die Abgasleitung, angeordnet sein. Selbstverständlich sind auch Positionen innerhalb der Bypassleitung zwischen dem Eingangsbereich und dem Ausgangsbereich möglich. Ebenso kann jeder Bypassleitung ein eigenes Stellglied oder mehrere Stellglieder an den genannten Positionen zugeordnet sein. Ebenso ist es möglich, ein Stellglied mehreren Bypassleitungen gemeinsam zuzuordnen.

Gemäß einer anderen Ausführungsform umfasst die thermoelektrische Wandlerstufe einen Radialkatalysator und/oder einen Axialkatalysator.

Außerdem kann die mindestens eine Bypassleitung im Wesentlichen extern zu der Abgasleitung ausgebildet sein. Dies bedeutet, dass die eine oder mindestens eine der mehreren Bypassleitungen im Wesentlichen separat zu der Abgasleitung und somit nicht in den Komponenten der Abgasleitung integriert sind. Zwar können Kupplungsabschnitte insbesondere im Bereich des Eingangsbereichs und des Ausgangsbereich zur Anbindung eines Leitungsabschnitts der Bypassleitung bzw. mehrerer Bypassleitungen vorgesehen werden, jedoch soll vorzugsweise keine vollständige Integration in die anderen Komponenten erfolgen. Diese Bauweise erlaubt eine besonders einfache und kostengünstige Herstellung und Montage.

Alternativ können die eine oder die mehreren Bypassleitungen durch geometrische Anpassung eines Wastegate-Kanals des Abgasturboladers erfolgen, so dass dieser Kanal an den beschriebenen Eingangs- und Ausgangsstellen von der Abgasleitung abzweigt bzw. in diese einmündet.

Die Erfindung wird nachfolgend unter Bezugnahme auf die Zeichnungen anhand zweier Ausführungsbeispiele näher erläutert. Darin zeigen:
Fig. 1 eine Abgasanlage gemäß dem Stand der Technik,
Fig. 2 eine Abgasanlage mit einer Bypassleitung und einer Wandleranordnung gemäß der Beschreibung in schematischer Ansicht,
Fig. 3 eine alternative Ausführungsform einer Wandleranordnung für eine Abgasanlage gemäß Fig. 2.

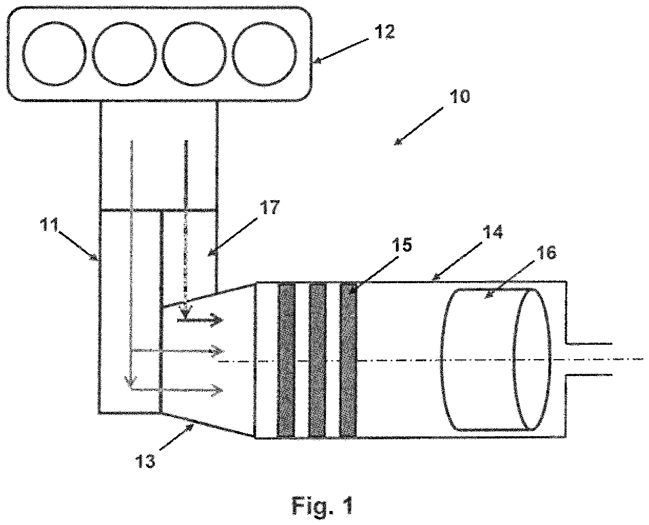

Bei den in Fig. 1 bis 3 dargestellten Beispielen handelt es sich nicht um Ausführungsformen der Erfindung, sondern um Beispiele, die das Verständnis der Erfindung erleichtern sollen.

In Fig. 1 ist eine Abgasanlage 10 gemäß dem Stand der Technik dargestellt. Die Abgasanlage 10 umfasst eine Abgasleitung 11 mit einen Krümmer 12, der beispielsweise mit einem Verbrennungsmotor (nicht dargestellt) eines Kraftfahrzeugs zum Ausleiten eines Abgases verbindbar ist. Des Weiteren umfasst die Abgasleitung 11 einen Abgasturbolader mit einer Turbine 13 und ein stromabwärts angeordnetes Flammrohr 14 mit einem integrierten thermoelektrischen Generator 15 sowie einem hierzu in Strömungsrichtung nachfolgend angeordneten Abgaskatalysator 16, der beispielsweise als Axialkatalysator ausgeführt ist. Die Abgasanlage 10 kann außerdem in eine heiße Seite ("Hot end") und eine kalte Seite ("Cold End") unterteilt werden, wobei das "Hot end" die folgenden Komponenten umfasst: Abgasleitung 11, Krümmer 12, Turbine 13 und eine Bypassleitung 17. Das "Cold End" umfasst in diesem Fall die folgenden Komponenten: Flammrohr 14 und Abgaskatalysator 16.

Die Bypassleitung 17 zweigt aus der Abgasleitung 11 in Strömungsrichtung vor der Turbine 13 ab und mündet üblicherweise hinter der Turbine 17 in die Abgasleitung 11 zur Rückführung des abgezweigten Abgases ein.

Der thermoelektrische Generator 15 ist ein System zur Erzielung einer Abgasenergierückgewinnung und nutzt den sogenannten "Seebeck-Effekt", um Wärme in elektrische Energie zu wandeln. Hierzu ist eine Temperaturdifferenz erforderlich, die zwischen dem in der Abgasleitung geführten Abgas und einem durch den thermoelektrischen Generator 15 fließenden Kühlmittel erzeugt wird.

Die bekannte Anordnung 10 weist jedoch den Nachteil auf, dass bei bestimmten Betriebszuständen des Verbrennungsmotors ein erzeugter Abgasgegendruck derart ansteigt, dass sich hierdurch eine Ladungswechselarbeit des Verbrennungsmotors in unvorteilhafter Weise erhöht. Des Weiteren kann ein Wärmeeintrag in ein Kühlmittel des thermoelektrischen Generators 15 derart ansteigen, dass dieser von den verwendeten Kühlern nicht in ausreichendem Maße abgeführt werden kann. Zusätzlich besteht die Gefahr, dass aufgrund einer zu hohen Abgastemperatur ein thermoelektrisches Material des thermoelektrischen Generators Schaden nehmen kann.

Der thermoelektrische Generator 15 ist in der dargestellten Ausführungsform beispielsweise als sogenannter Radialkatalysator ausgeführt. Dies bedeutet, dass dieser axial angeströmt, jedoch in radialer Richtung durchströmt wird. Zusätzlich umfasst das Flammrohr 14 - wie beschrieben - den Abgaskatalysator 16 als zweites Katalysatorelement, das beispielhaft als Axialkatalysator dargestellt ist. Die Zweiteilung in einen ersten 15 und einen zweiten Katalysator 16 mit jeweils einem eigenen Monolithen ermöglicht insbesondere ein vorteilhaftes Aufheizverhalten sowie eine verbesserte Emissionierung.

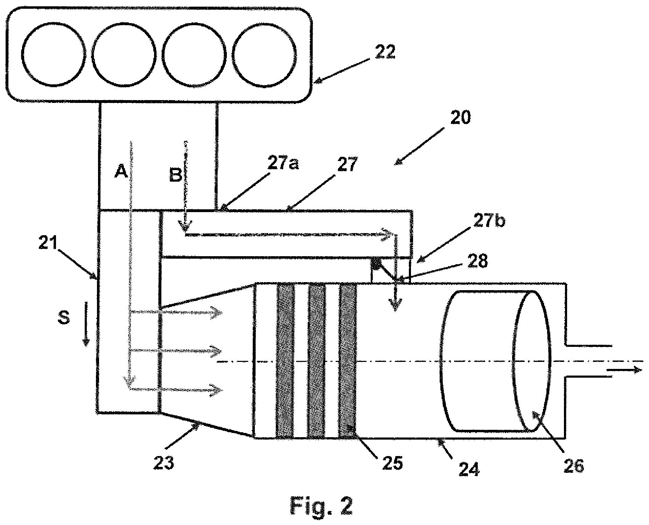

Fig. 2 zeigt ein Beispiel einer Abgasanlage 20, welches nicht Teil der Erfindung ist, sondern lediglich das Verständnis der Erfindung erleichtern soll. Diese Abgasanlage 20 - beispielsweise für eine Verbrennungskraftmaschine - mit einer Abgasleitung 21, wobei die Abgasleitung 21 einen Abgasturbolader bzw. dessen Turbine 23 sowie eine in Strömungsrichtung S eines Abgases nachfolgend angeordnete thermoelektrische Wandleranordnung 24 mit einer thermoelektrischen Wandlerstufe 25 umfasst. Der Abgasleitung 21 ist eine Bypassleitung 27 zugeordnet, welche stromaufwärts vor der Turbine 23 des Abgasturboladers aus der Abgasleitung 21 zum Ausleiten.mindestens eines Anteils des Abgases in die Bypassleitung 27 abgasführend abzweigt. Die Bypassleitung 27 mündet stromabwärts hinter der thermoelektrischen Wandlerstufe 25 in die Abgasleitung 21 bzw. in den nachfolgenden Teil der Wandleranordnung 24 abgasführend ein.

Die thermoelektrische Wandleranordnung 24 umfasst außerdem eine in Strömungsrichtung S des Abgases nachfolgend zu der thermoelektrischen Wandlerstufe 25 angeordnete Katalysatorstufe 24, die beispielsweise als Axialkatalysator ausgebildet ist. Die Bypassleitung 27 mündet somit zwischen der thermoelektrischen Wandlerstufe 25 und der stromabwärts nachfolgenden Katalysatorstufe 26 in die Abgasleitung 21 bzw. die Wandleranordnung 24 abgasführend ein.

In der dargestellten Ausführungsform ist die thermoelektrische Wandlerstufe 25 als thermoelektrischer Generator ausgestaltet und innerhalb der Abgasleitung 21 angeordnet, so dass dieser unmittelbar von dem in der Abgasleitung 21 strömenden Abgas durchströmt und beaufschlagt wird.

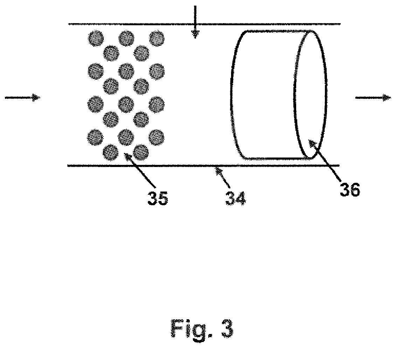

Der thermoelektrische Generator weist eine thermoelektrische sandwichartige Struktur auf. Eine Alternative hierzu ist in Fig. 3 dargestellt, wobei auch dieses Beispiel nicht Teil der Erfindung ist, sondern lediglich das Verständnis der Erfindung erleichtern soll.

Um eine Durchströmung der Bypassleitung 27 zu beeinflussen, umfasst die Bypassleitung 27 ein Stellglied 28 (lediglich schematisch angedeutet), beispielsweise in Form einer betätigbaren Klappe, zum wahlweisen und mindestens teilweisen Schließen und/oder Öffnen der Bypassleitung 27. Befindet sich das Stellglied 28 in einer geschlossenen Stellung, so ist die Bypassleitung 27 geschlossen, so dass ein Durchströmen von Abgas verhindert und das Abgas in vollem Umfang durch die Abgasleitung 21 geführt wird (Pfeil A). Befindet sich das Stellglied 28 dagegen in einer zumindest teilweise geöffneten Stellung, so kann zumindest ein Anteil des Abgases durch die Bypassleitung 27 strömen (Pfeil B). Ein restlicher Anteil des Abgases, soweit vorhanden, folgt weiterhin der Abgasleitung 21 (Pfeil A).

Das Stellglied 28 kann beispielsweise als Wastegateklappe ausgestaltet sein. Außerdem kann das Stellglied 28 an beliebiger Stelle der Bypassleitung 27, vorzugsweise im Bereich einer Eingarigsstelle 27a oder im Bereich einer dargestellten Ausgangsstelle 27b, angeordnet sein.

Wie ebenfalls aus Fig. 2 erkennbar, ist die Bypassleitung 27 im Wesentlichen extern zu der Abgasleitung 21 ausgebildet und lediglich im Bereich der Eingangsstelle 27a und im Bereich der Ausgangsstelle 27b mit dieser bzw. den Komponenten der Abgasleitung 21 verbunden.

Fig. 3 zeigt eine alternative Ausführungsform einer Wandleranordnung 34 für eine Abgasanlage 20 gemäß Fig. 2. Die dargestellte Wandleranordnung 34 umfasst ebenfalls eine Wandlerstufe 35 sowie eine Katalysatorstufe 36. Im Gegensatz zu der Wandleranordnung 24 aus Fig. 2 weist die in Fig. 3 dargestellte Wandlerstufe 25 eine thermoelektrische Röhrenstruktur auf. Beispielsweise kann es sich hierbei auch um einen Rohrbündelwärmeübertrager handeln.

## Patentansprüche

1. Abgasanlage, insbesondere für eine Verbrennungskraftmaschine, mit einer Abgasleitung (21), wobei die Abgasleitung (21) zumindest einen Abgasturbolader (23) sowie eine in Strömungsrichtung (S) eines Abgases nachfolgend angeordnete thermoelektrische Wandleranordnung (24) mit einer thermoelektrischen Wandlerstufe (25) umfasst, wobei der Abgasleitung (21) mindestens eine Bypassleitung (27) zugeordnet ist, welche stromaufwärts vor dem Abgasturbolader (23) aus der Abgasleitung (21) zum Ausleiten mindestens eines Anteils des Abgases in die mindestens eine Bypassleitung (27) abgasführend abzweigt, wobei
die mindestens eine Bypassleitung (27) stromabwärts hinter der thermoelektrischen Wandlerstufe (25) abgasführend in die Abgasleitung (21) einmündet. **dadurch gekennzeichnet, dass** die thermoelektrische Wandlerstufe (25) einen thermoelektrischen Generator, mindestens einen Wärmetauscher und einen mit dem Wärmetauscher gekoppelten Kühlkreislauf umfasst, wobei der mindestens eine Wärmetauscher mit der Abgasleitung (21) wirkgekoppelt ist, um einen Wärmeaustausch zwischen der Abgasleitung (21) und dem mit dem Wärmetauscher gekoppelten Kühlkreislauf zu bewirken, wobei außerdem der thermoelektrische Generator der thermoelektrischen Wandlerstufe (25) mit dem Kühlkreislauf derart wirkgekoppelt ist, dass der thermoelektrische Generator innerhalb des Kühlkreislaufs und somit außerhalb der Abgasleitung (21) angeordnet ist, wobei ein Wärmeaustausch über den mit der Abgasleitung (21) wirkgekoppelten Wärmetauscher auf ein Kühlmedium des Kühlkreislaufs erfolgt und dieses erwärmt und das erwärmte Kühlmedium wiederum nachfolgend den thermoelektrischen Generator beaufschlagt.

2. Abgasanlage nach Anspruch 1, **dadurch gekennzeichnet, dass** die thermoelektrische Wandleranordnung (24) eine in Strömungsrichtung (S) des Abgases nachfolgend zu der thermoelektrischen Wandlerstufe (25) angeordnete Katalysatorstufe (26) umfasst, wobei die mindestens eine Bypassleitung (27) zwischen der thermoelektrischen Wandlerstufe (25) und der stromabwärts nachfolgenden Katalysatorstufe (26) in die Abgasleitung (21) abgasführend einmündet.

3. Abgasanlage nach einem der Ansprüche 1 bis 2, **dadurch gekennzeichnet, dass** der thermoelektrische Generator eine thermoelektrische sandwichartige Struktur und/oder eine thermoelektrische Röhrenstruktur, insbesondere einen Rohrbündelwärmeübertrager, aufweist.

4. Abgasanlage nach einem der Ansprüche 1 bis 3, **dadurch gekennzeichnet, dass** die mindestens eine Bypassleitung (27) ein Stellglied (28), insbesondere eine betätigbare Klappe, zum wahlweisen und mindestens teilweisen Schließen und/oder Öffnen der Bypassleitung (27) umfasst.

5. Abgasanlage nach einem der Ansprüche 1 bis 4, **dadurch gekennzeichnet, dass** die thermoelektrische Wandlerstufe (25) einen Radialkatalysator und/oder einen Axialkatalysator umfasst.

6. Abgasanlage nach einem der Ansprüche 1 bis 5, **dadurch gekennzeichnet, dass** die mindestens eine Bypassleitung (27) im Wesentlichen extern zu der Abgasleitung (21) ausgebildet ist.

## Claims

1. An exhaust system, especially for an internal combustion engine, comprising an exhaust line (21), wherein the exhaust line (21) comprises at least one turbocharger (23) as well as a thermoelectric converter arrangement (24), arranged downstream in the flow direction (S) of an exhaust gas, with a thermoelectric converter stage (25), wherein associated with the exhaust line (21) is at least one bypass line (27) which branches off, conveying the exhaust gas, upstream of the turbocharger (23) from the exhaust line (21) to discharge at least a proportion of the exhaust gas into the at least one bypass line (27) wherein
the at least one bypass line (27) leads into the exhaust line (21), conveying the exhaust gas, downstream of the thermoelectric converter stage (25), **characterised in that** the thermoelectric converter stage (25) comprises a thermoelectric generator, at least one heat exchanger and a cooling circuit coupled to the heat exchanger, wherein the at least one heat exchanger is operatively coupled to the exhaust line (21) to cause an exchange of heat between the exhaust line (21) and the cooling circuit coupled to the heat exchanger, wherein furthermore the thermoelectric generator of the thermoelectric converter stage (25) is operatively coupled to the cooling circuit such that the thermoelectric generator is arranged inside the cooling circuit and thus outside the exhaust line (21), wherein heat is exchanged via the heat exchanger, operatively coupled to the exhaust line (21), onto a cooling medium of the cooling circuit and heats the cooling medium and in turn the heated cooling medium subsequently acts on the thermoelectric generator.

2. An exhaust system according to claim 1, **characterised in that** the thermoelectric converter arrangement (24) comprises a catalyst stage (26) arranged downstream of the thermoelectric converter stage (25) in the flow direction (S) of the exhaust gas, wherein the at least one bypass line (27) leads into the exhaust line (21), conveying exhaust gas, between the thermoelectric converter stage (25) and the downstream catalyst stage (26).

3. An exhaust system according to any of claims 1 to 2, **characterised in that** the thermoelectric generator has a thermoelectric sandwich-type structure and/or a thermoelectric tube structure, especiallty it comprises a tube bundle heat exchanger.

4. An exhaust system according to any of claims 1 to 3, **characterised in that** the at least one bypass line (27) comprises a control element (28), especially an actuatable flap, for selectively and at least partly closing and/or opening the bypass line (27).

5. An exhaust system according to any of claims 1 to 4, **characterised in that** the thermoelectric converter stage (25) comprises a radial catalyst and/or an axial catalyst.

6. An exhaust system according to any of claims 1 to 5, **characterised in that** the at least one bypass line (27) is configured substantially externally with respect to the exhaust line (21).

## Revendications

1. Installation de gaz d'échappement en particulier d'un moteur à combustion interne comprenant une conduite de circulation des gaz d'échappement (21), cette conduite (21) comprenant au moins un turbocompresseur de suralimentation (23), ainsi qu'un dispositif convertisseur thermoélectrique (24) équipé d'un étage de conversion thermoélectrique (25), monté en aval dans le sens de circulation (S) des gaz d'échappement, à la conduite de circulation des gaz d'échappement (21) étant associée au moins une conduite de dérivation (27) qui s'embranche en amont en guidant les gaz d'échappement à l'avant du turbocompresseur de suralimentation (23) sur la conduite de circulation des gaz d'échappement (21) de façon à dégager au moins une partie des gaz d'échappement dans cette conduite de dérivation (27),
la conduite de dérivation (27) débouchant en aval en guidant les gaz d'échappement dans la conduite de circulation des gaz d'échappement (21) à l'arrière de l'étage de conversion thermoélectrique (25), **caractérisée en ce que**
l'étage de conversion thermoélectrique (25) comprend un générateur thermoélectrique, au moins un échangeur de chaleur et un circuit de refroidissement couplé à cet échangeur de chaleur, l'échangeur de chaleur étant fonctionnellement couplé à la conduite de circulation des gaz d'échappement (21) pour provoquer un échange de chaleur entre cette conduite (21) et le circuit de refroidissement couplé à l'échangeur de chaleur, le générateur thermoélectrique, de l'étage de conversion thermoélectrique (25) étant en outre fonctionnellement couplé au circuit de refroidissement de sorte que le générateur thermoélectrique soit situé dans le circuit de refroidissement et ainsi à l'extérieur de la conduite de circulation des gaz d'échappement (21), un échange de chaleur se produisant sur l'échangeur de chaleur fonctionnellement couplé à la conduite de circulation des gaz d'échappement (21) avec le fluide de refroidissement du circuit de refroidissement, et chauffant celui-ci, et le fluide de refroidissement chauffé étant ensuite à nouveau fourni au générateur thermoélectrique.

2. Installation de gaz d'échappement conforme à la revendication 1, **caractérisée en ce que**
le dispositif convertisseur thermoélectrique (24) comporte un étage de catalyseur (26) monté à la suite de l'étage de conversion thermoélectrique (25) dans le sens de circulation (S) des gaz d'échappement, la conduite de dérivation (27) débouchant en guidant les gaz d'échappement dans la conduite de circulation des gaz d'échappement (21), entre l'étage de conversion thermoélectrique (25) et l'étage de catalyseur (26) situé en aval à sa suite.

3. Installation de gaz d'échappement conforme à l'une des revendications 1 à 2,
**caractérisée en ce que**
le générateur thermoélectrique comporte une structure thermoélectrique de type sandwich et/ou une structure thermoélectrique à tubes en particulier un échangeur de chaleur à faisceaux de tubes.

4. Installation de gaz d'échappement conforme à l'une des revendications 1 à 3,
**caractérisée en ce que**
la conduite de dérivation (27) comporte un organe de réglage (28) en particulier un volet mobile pour pouvoir sélectivement et au moins partiellement fermer et/ ou ouvrir cette conduite de dérivation (27).

5. Installation de gaz d'échappement conforme à l'une des revendications 1 à 4,
**caractérisée en ce que**
l'étage de conversion thermoélectrique (25) comprend un catalyseur radial et/ou un catalyseur axial.

6. Installation de gaz d'échappement conforme à l'une des revendications 1 à 5,
**caractérisé en ce que**
la conduite de dérivation (27) est essentiellement formée à l'extérieur de la conduite de circulation des gaz d'échappement (21).
